# EUROPÄISCHE PATENTSCHRIFT

(11) **EP 3 339 682 B1**
(45) Veröffentlichungstag und Bekanntmachung des Hinweises auf die Patenterteilung: **24.08.2022**
(21) Anmeldenummer: 17198209.3
(22) Anmeldetag: 25.10.2017
(51) Int. Cl.: F16H 3/16, F16H 3/20, F16H 55/17

(54) **SCHIEBERAD FÜR EINE SCHALTGETRIEBEANORDNUNG**
SLIDING GEAR FOR A GEARBOX ARRANGEMENT
PIGNON BALADEUR POUR UN DISPOSITIF DE BOÎTE À PIGNONS BALADEURS

(30) Priorität: 20.12.2016 DE 102016124920
(43) Veröffentlichungstag der Anmeldung: 27.06.2018
(73) Patentinhaber: CLAAS Industrietechnik GmbH, 33106 Paderborn (DE)
(72) Erfinder: Loeneke, Markus, 33142 Büren (DE); Gockel, Niclas, 59872 Meschede (DE); Bleischwitz, Stephan, 33178 Borchen (DE)
(74) Vertreter: CLAAS Gruppe

(56) Entgegenhaltungen:
- EP-A1- 0 022 411
- DE-A1- 4 102 280
- FR-A1- 3 014 987
- JP-A- 2011 214 696
- JP-U- H0 614 596
- JP-U- S5 886 951
- JP-U- S52 103 280
- US-A- 2 696 124
- US-A- 3 150 530
- US-A- 5 983 741
- US-A1- 2012 247 241

## Beschreibung

Die vorliegende Erfindung betrifft eine ein Schieberad umfassende Schaltgetriebeanordnung gemäß dem Oberbegriff des Anspruches 1.

Ein Schieberad für eine Schaltgetriebeanordnung sowie eine Schaltgetriebeanordnung der eingangs genannten Art sind aus der DE 1 085 042 A1 sowie der JP 2011 214 696 A1 bekannt. Die DE 1 085 042 A1 hat ein mehrstufiges Stirnradgetriebe zum Gegenstand, mit einer treibenden Welle, auf der lose drehende Zahnräder sowie ein axial verschiebliches Schieberad angeordnet sind, und einer Vorgelegewelle, auf der ein lose drehendes Zahnrad sowie ein axial verschiebliches Zahnrad angeordnet sind. Das Schieberad sowie das axial verschiebliche Zahnrad weisen eine Innenverzahnung auf, mittels der diese auf der treibenden Welle bzw. der Vorgelegewelle durch eine Führungsverzahnung eines Führungsabschnitts kraftschlüssig in Eingriff stehen. Das Schieberad sowie das axial verschiebliche Zahnrad weisen auf zumindest einer Seite eine Schaltverzahnung in Form von Klauen auf, welche mit einer korrespondierenden Verzahnung an zumindest einem der auf der treibenden Welle bzw. Vorgelegewelle angeordneten, lose drehenden Zahnräder in Eingriff bringbar ist.

Bei Schaltvorgängen kann es unter bestimmten Umständen dazu kommen, dass das Einlegen eines Ganges nicht bzw. nur mit hohen Schaltkräften möglich ist. Letzteres ist beispielsweise dann der Fall, wenn während des Vorgangs des Gangeinlegens die treibende Welle und die Vorgelegewelle nicht frei zueinander drehen können und die Schaltverzahnung des Schieberades und die korrespondierende Verzahnung an dem zu schaltenden Zahnrad in einer Schaltstellung Zahn vor Zahn stehen. Um in dieser Situation den Gang einlegen zu können, bedarf es der Erzeugung einer zusätzlichen Relativbewegung zwischen der Schaltverzahnung des Schieberades und der korrespondierenden Verzahnung des zu schaltenden Zahnrades. Die Erzeugung dieser Relativbewegung erfolgt hierzu durch die Betätigung einer mit einer der Wellen verbundenen Funktionseinheit, wie dem Lösen einer Bremse oder das Drehen der treibenden Welle durch einen Antrieb.

Der vorliegenden Erfindung liegt die Aufgabe zugrunde, ein Schieberad der eingangs genannten Art sowie ein Schaltgetriebe derart weiterzuentwickeln, dass eine Relativbewegung zwischen dem Schieberad und einem in Eingriff zu bringenden Zahnrad ohne eine zusätzliche Fremdbetätigung einer Aktorik möglich ist.

Diese Aufgabe wird erfindungsgemäß durch eine ein Schieberad umfassende Schaltgetriebeanordnung gemäß dem unabhängigen Anspruch 1 gelöst.

Vorteilhafte Weiterbildungen der Erfindung sind Gegenstand der von diesen abhängigen Unteransprüchen.

Erfindungsgemäß wird eine Schaltgetriebeanordnung ein Schieberad umfassend, welches mit einer Innenverzahnung ausgeführt ist, vorgeschlagen, mittels der das Schieberad auf einer mit einem eine Führungsverzahnung aufweisenden Führungsabschnitt versehenen Welle axial verschieblich angeordnet ist, sowie mit zumindest einer an dem Schieberad angeordneten Schaltverzahnung, welche mit einer korrespondierenden Verzahnung an zumindest einem auf der Welle angeordneten, lose drehenden Schaltzahnrad in Eingriff bringbar ist. Zum in Eingriff bringen der zumindest einen Schaltverzahnung mit der korrespondierenden Verzahnung des zumindest einen Schaltzahnrades weist das Schieberad einen integrierten Verdrehausgleich auf. Die Integration des Verdrehausgleichs in das Schieberad ermöglicht eine automatische Erzeugung einer Relativbewegung zwischen der Schaltverzahnung und der korrespondierenden Verzahnung des Schaltzahnrades. Des Weiteren werden durch die Integration des Verdrehausgleichs in das Schieberad keine kostenintensiven Bauteile benötigt. Eine Betätigung einer mit einer der treibenden Welle oder der Vorgelegewelle verbundenen Funktionseinheit, wie das Lösen einer Bremse oder das Drehen der treibenden Welle durch einen Antrieb, sind nicht erforderlich. Der Schaltvorgang lässt sich somit ohne eine Bewegung eines Fahrzeugs realisieren. Durch die Integration des Verdrehausgleichs in das Schieberad wird eine Trennung der Funktionen Führung des Schieberades und Eingreifen der Schaltverzahnung in die korrespondierende Verzahnung der des zumindest einen Schaltzahnrades ermöglicht. Die Relativbewegung zwischen dem Schieberad und dem zu schaltenden Zahnrad erfolgt bei gleichzeitig feststehenden, nicht drehbaren, Wellen.

Erfindungsgemäß ist zur Erzeugung der Relativbewegung zwischen der Innenverzahnung des Schieberades und der Führungsverzahnung auf der Welle ein Verdrehspiel vorgesehen. Das Verdrehspiel ermöglicht in Umfangsrichtung der Welle, auf der das Schieberad axial verschieblich angeordnet ist, eine Ausgleichsbewegung des Schieberades relativ zu dem Schaltzahnrad.

Vorteilhaft ist es, wenn die zumindest eine Schaltverzahnung seitlich an dem Schieberad angeordnet ist.

Erfindungsgemäß ist die Innenverzahnung gegenüber der Schaltverzahnung des Schieberades zurückgesetzt angeordnet. Die zurückgesetzte Anordnung der Innenverzahnung des Schieberades ermöglicht den Verdrehausgleich aufgrund des Verdrehspiels zwischen der Innenverzahnung des Schieberades und der Führungsverzahnung auf dem Führungsabschnitt, bevor die Schaltverzahnung und die korrespondierende Verzahnung des mindestens einen Schaltrades vollständig in Eingriff stehen.

Bevorzugt können einander zugewandte Stirnflächen der Schaltverzahnung und/ oder der korrespondierenden Verzahnung des zumindest einen Schaltzahnrades ein sich in axialer Richtung abschnittsweise verjüngendes Profil aufweisen. Die sich verjüngend ausgeführte Profilierung der Stirnflächen der korrespondierenden Verzahnung des zumindest einen Schaltzahnrades und/oder der Schaltverzahnung des Schieberades hat den Vorteil, dass bei einer Stellung der Schaltverzahnung und der korrespondierenden Verzahnung Zahn vor Zahn ein seitliches Weggleiten begünstigt wird, welches durch das Verdrehspiel zwischen der Führungsverzahnung und der Innenverzahnung ermöglicht wird. Auf diese Weise können die Schaltverzahnung und die korrespondierende Verzahnung ineinander greifen, ohne das es einer zusätzlichen von außen aufgeprägten Bewegung des Schieberades oder des zu schaltenden Zahnrads bedarf.

Erfindungsgemäß sind Mittel zur Zentrierung der Innenverzahnung des Schieberades relativ zur Führungsverzahnung vorgesehen. Hierdurch kann eine Zentrierung des Verdrehspiels realisiert werden. Die Zentrierung des Schieberades kann dazu jeweils in Schaltphasen der Schaltgetriebeanordnung erfolgen, in denen eine Neutralstellung des Schieberades gegeben ist.

Hierzu können die Mittel zur Zentrierung als zumindest ein federbelastetes Zentrierelement ausgeführt sein, welches sich in einer Bohrung und einer Zentriernut abstützt. Dazu kann das Zentrierelement kugelförmig ausgebildet sein oder als ein zylindrisches Bauteil mit einer halbkugelförmigen Stirnfläche, welche sich in der Zentriernut abstützt. Die Bohrung kann als Sacklochbohrung ausgeführt sein. Zur Belastung des zumindest einen Zentrierelementes ist vorzugsweise ein Spiralfeder in der Bohrung angeordnet.

Bevorzugt kann die mindestens eine Bohrung in das Schieberad und die mindestens eine Zentriernut in den Führungsabschnitt eingelassen sein. Dazu kann die Bohrung aus fertigungstechnischen Gründen eine Neigung zur Längsachse des Schiebrades aufweisen.

Alternativ kann die mindestens eine Bohrung in den Führungsabschnitt und die Zentriernut in das Schieberad eingelassen sein. Diese Variante ist fertigungstechnisch mit einem geringeren Aufwand darstellbar.

Die vorliegende Erfindung wird nachstehend anhand von in den Zeichnungen dargestellten Ausführungsbeispielen näher erläutert.

Es zeigen:
- Fig. 1: eine perspektivische Darstellung einer Schaltgetriebeanordnung in einer Schnittansicht;
- Fig. 2: eine Ansicht der Schaltgetriebeanordnung in einer Neutralstellung sowie eine Schnittansicht der Getriebeanordnung entlang der Linie A-A mit einem Schieberad gemäß einer ersten Ausführungsform;
- Fig. 3: eine Ansicht der Schaltgetriebeanordnung in einer Neutralstellung sowie eine Schnittansicht der Getriebeanordnung entlang der Linie B-B mit einem Schieberad gemäß einer zweiten Ausführungsform;
- Fig. 4: eine Teilschnittansicht des Schieberades gemäß der ersten Ausführungsform nach Fig. 2;
- Fig. 5: eine perspektivische Ansicht eines frei drehenden Zahnrades der Getriebeanordnung.

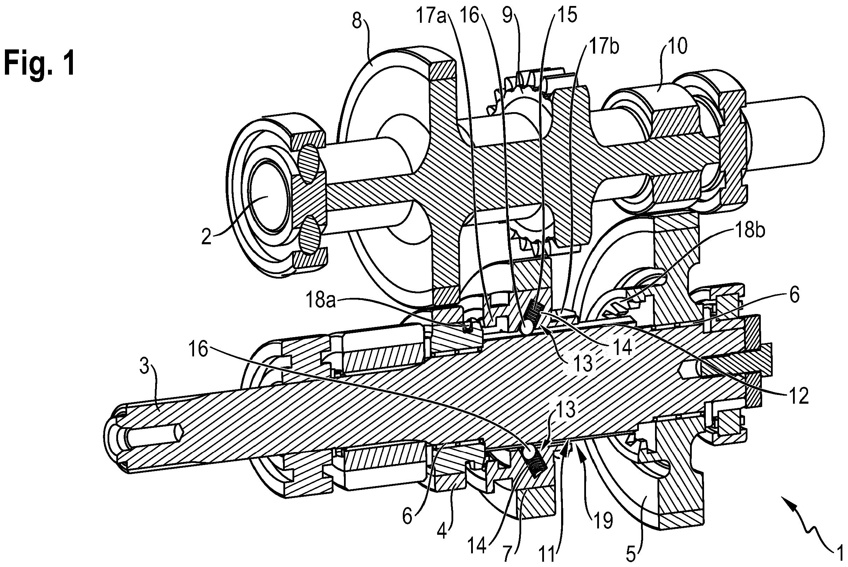

In Fig. 1 ist eine perspektivische Darstellung einer Schaltgetriebeanordnung 1 in einer Teilschnittansicht dargestellt. Die Getriebeanordnung 1 ist gemäß dem dargestellten Ausführungsbeispiel als ein dreistufiges Stirnradgetriebe ausgeführt. Die Schaltgetriebeanordnung 1 umfasst eine Antriebswelle 2 sowie eine Zwischenwelle 3. Auf der Zwischenwelle 3 sind ein erstes Zahnrad 4 sowie ein zweites Zahnrad 5 frei drehbar angeordnet. Hierzu sind das erste Zahnrad 4 bzw. das zweite Zahnrad 5 mittels jeweils eines Lagers 6 auf der Zwischenwelle 3 gelagert. Zwischen dem ersten Zahnrad 4 und dem zweiten Zahnrad 5 ist ein mit einer Stirnverzahnung versehenes Schieberad 7 mittels einer Schaltvorrichtung in axialer Richtung verschieblich angeordnet. Auf der Antriebswelle 2 sind ein drittes Zahnrad 8, ein viertes Zahnrad 9 sowie ein fünftes Zahnrad 10 drehfest angeordnet. Das dritte Zahnrad 8 kämmt mit dem frei drehenden ersten Zahnrad 4 während das fünfte Zahnrad 10 mit dem frei drehenden zweiten Zahnrad 5 kämmt.

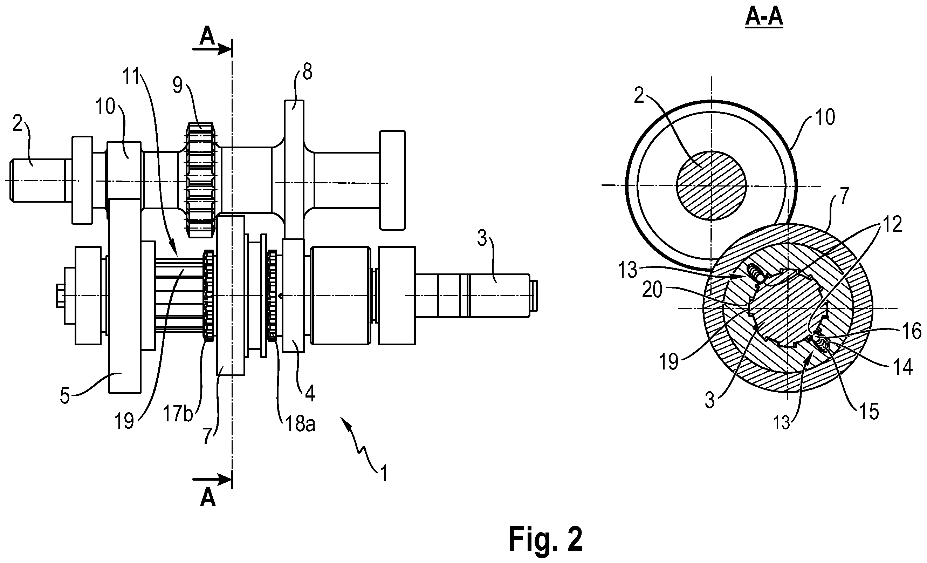

Zwischen dem ersten Zahnrad 4 und dem zweiten Zahnrad 5 erstreckt sich auf der Zwischenwelle 3 ein mit einer zahnförmigen Profilierung versehener Führungsabschnitt 11. Entlang dieses Führungsabschnitts 11 ist das Schieberad 7 axial verschieblich angeordnet. Mittels des Führungsabschnitts 11 besteht zwischen dem Schieberad 7 und der Zwischenwelle 3 eine kraftschlüssige Verbindung. Der Führungsabschnitt 11 weist wenigstens eine sich in axialer Richtung erstreckende Zentriernut 12 auf. Die Zentriernut 12 weist einen im Wesentlichen V-förmigen Querschnitt auf. In dem dargestellten Ausführungsbeispiel sind zwei Zentriernuten 12 auf dem Führungsabschnitt 11 angeordnet, welche in Umfangsrichtung der Zwischenwelle 3 um einen Winkel von 180° versetzt zueinander angeordnet sind. Mit diesen Zentriernuten 12 in dem Führungsabschnitt 11 stehen in das Schieberad 7 integrierte Mittel 13 zur Zentrierung in Eingriff. Das jeweilige Mittel zur Zentrierung 13 umfasst eine in das Schieberad 7 eingelassene Bohrung 14, ein Federelement 15 sowie ein Zentrierelement 16. Das Federelement 15 stützt sich am Boden der Bohrung 14 ab und beaufschlagt das Zentrierelement 16 mit einer Federkraft, welche das Zentrierelement 16 in die Zentriernut 12 presst. Das Zentrierelement 15 kann kugelförmig ausgebildet sein, wie in Fig. 2 dargestellt, oder als ein zylindrisches Bauteil mit einer halbkugelförmigen Stirnfläche, welche mit der Zentriernut 12 in Eingriff steht. Das Federelement 15 ist als Druckfeder ausgeführt.

Die Bohrung 14 weist einen zu der Zentriernut 12 geneigten Verlauf im Inneren des Schieberades 7 auf. Das Schieberad 7 weist auf seinen den frei drehenden Zahnrädern 4 und 5 zugewandten Seiten jeweils eine Schaltverzahnung 17a, 17b auf, welche in Abhängigkeit von der Schaltstellung der Schaltgetriebeanordnung 1 mit einer korrespondierenden Verzahnung 18a, 18b an den frei drehenden Zahnrädern 4, 5 in Eingriff gebracht wird, um einen Kraftschluss zwischen dem ersten Zahnrad 4 und dem dritten Zahnrad 8 beziehungsweise dem zweiten Zahnrad 5 und dem fünften Zahnrad 10 zu bewirken.

Wie aus der Darstellung in Fig. 1 ersichtlich, sind die seitlich angeordneten Schaltverzahnungen 17a und 17b unterschiedlich ausgeführt. Die dem frei drehenden Zahnrad 5 zugewandte Schaltverzahnung 17b des Schieberades 7 ist als eine auf einem zylindrischen Abschnitt außenliegende Verzahnung ausgeführt. Hingegen ist die dem frei drehenden Zahnrad 4 zugewandte Schaltverzahnung 17a des Schieberades 7 ist als in einem zylindrischen Abschnitt innenliegende Verzahnung ausgeführt. Dem entsprechend weist das frei drehende Zahnrad 5 eine als Innenverzahnung ausgebildete korrespondierende Verzahnung 18b auf, während das frei drehende Zahnrad 4 eine als Außenverzahnung ausgebildete korrespondierende Verzahnung 18a aufweist. Selbstverständlich sind auch Variationen denkbar, bei welchen das Schieberad 7 nur außenliegende oder nur innenliegende Verzahnungen aufweist, während die korrespondierenden Verzahnungen der zu schaltenden Zahnräder 4, 5 komplementär ausgestaltet sind.

In Fig. 2 ist eine Ansicht der Schaltgetriebeanordnung 1 in einer Neutralstellung, in welcher sich das Schieberad 7 in einer zwischen dem dritten Zahnrad 8 und dem vierten Zahnrad 9 befindlichen Position befindet, sowie eine Schnittansicht der Schaltgetriebeanordnung 1 entlang der Linie A-A mit einem Schieberad 7 gemäß einer ersten Ausführungsform dargestellt.

Der Führungsabschnitt 11 der Zwischenwelle 3 ist über seinen Umfang mit einer Führungsverzahnung 19 versehen. Das Schieberad 7 weist eine hiermit korrespondierende Innenverzahnung 20 auf, welche mit der Führungsverzahnung 19 des Führungsabschnitts 11 in Eingriff steht. Hierdurch besteht unabhängig von der axialen Positionierung des Schieberades 7 auf der Zwischenwelle 3 zwischen der Zwischenwelle 3 und dem Schieberad 7 eine kraftschlüssige Verbindung. In der dargestellten Schaltstellung ist das Schieberad 7 durch axiales Verschieben in Richtung des frei drehenden Zahnrades 4 mit seiner Schaltverzahnung 17a mit der korrespondierenden Verzahnung 18a des frei drehenden Zahnrades 4 in Verbindung bringbar. Auf diese Weise wird das frei drehende Zahnrad 4 mit dem mit diesem kämmenden Zahnrad 8 auf der Antriebswelle 2 in Kraftschluss gebracht. Somit ist eine dritte Getriebestufe von drei Getriebestufen geschaltet. Das axiale Verschieben des Schieberades 7 in Richtung des Zahnrades 9, um das Schieberad 7 mit diesem in Eingriff zu bringen, schaltet eine zweite Getriebestufe. In dieser Schaltstellung der Schaltgetriebeanordnung 1 steht die beidseitig des Schieberades 7 angeordnete Schaltverzahnung 17a, 17b mit keiner der korrespondierenden Verzahnungen 18a, 18b der frei drehenden Zahnräder 4 oder 5 in Eingriff. Eine erste Getriebestufe wird geschaltet, wenn die Schaltverzahnung 17b des Schieberads 7 durch eine entsprechende axiale Verschiebung des Schieberades 7 mit der korrespondierenden Verzahnung 18b des frei drehenden Zahnrades 5 in Eingriff gebracht wird.

Die Schnittdarstellung A-A gemäß Fig. 2 zeigt die in das Schieberad 7 integrierte Anordnung der Zentriermittel 13. Das jeweilige Federelement 15 drückt das zugehörige Zentrierelement 16, welches im dargestellten Ausführungsbeispiel als Kugel ausgebildet ist, in die jeweilige Zentriernut 12 auf dem Führungsabschnitt 11. Das Schieberad 7 weist zum Zweck der Führung entlang des Führungsabschnitts 11 und zur Herstellung eines Kraftschluss mit der Zwischenwelle 3 eine Innenverzahnung 20 auf, mit der das Schieberad 7 mit der Führungsverzahnung 19 in Eingriff steht. Wie weiter aus der Darstellung gemäß Fig. 2 ersichtlich ist, besteht zwischen der Führungsverzahnung 19 und der Innenverzahnung 20 des Schieberades 7 in Umfangsrichtung ein Verdrehspiel, welches eine Auslenkbewegung des Schieberades 7 in Umfangsrichtung ermöglicht.

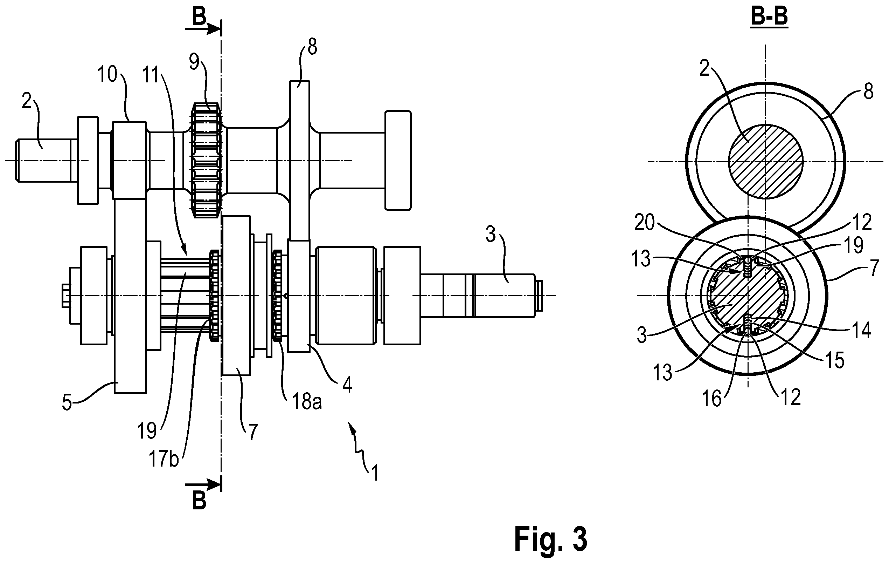

In Fig. 3 ist eine Ansicht der Getriebeanordnung 1 in einer Neutralstellung, in welcher sich das Schieberad 7 in einer zwischen dem dritten Zahnrad 8 und dem vierten Zahnrad 9 befindlichen Position befindet, sowie eine Schnittansicht der Schaltgetriebeanordnung 1 entlang der Linie B-B mit einem Schieberad 7 gemäß einer zweiten Ausführungsform dargestellt.

Der grundsätzliche Aufbau der Schaltgetriebeanordnung 1 gemäß der Darstellung in Fig. 3 unterscheidet sich nicht von dem gemäß der Fig. 2. Der einzige Unterschied gegenüber dem ersten Ausführungsbeispiel besteht in der abweichenden Anordnung der Zentriermittel 13 und der Zentriernuten 12. Bei diesem zweiten Ausführungsbeispiel sind die Zentriermittel 13 in den Führungsabschnitt 11 der Zwischenwelle 3 integriert. Dazu ist die jeweilige Bohrung 14 in die Zwischenwelle 3 eingearbeitet, von der das Federelement 15 sowie das Zentrierelement 16 aufgenommen werden, während die jeweiligen Zentriernuten 12 zwischen der Innenverzahnung 20 in das Schieberad 7 eingearbeitet sind. Die Ausrichtung der jeweiligen Bohrung 14 ist vertikal zur Längsachse der Zwischenwelle 3 orientiert.

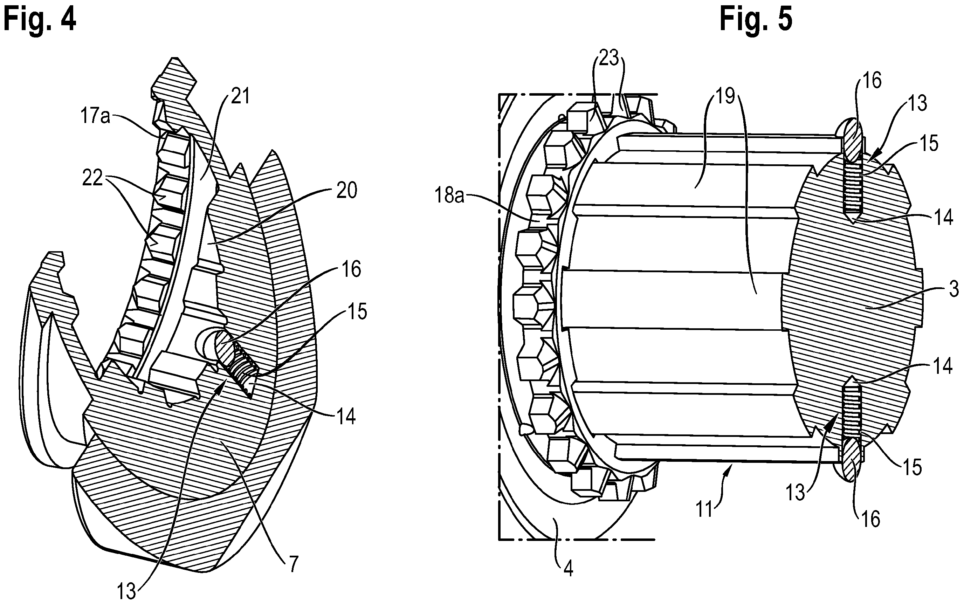

Die Darstellung in Fig. 4 zeigt eine Teilansicht des Schieberades 7 gemäß der ersten Ausführungsform nach Fig. 2. Aus der Ansicht ist ein Teil der Innenverzahnung 20 erkennbar, welche mit der Führungsverzahnung 19 der Zwischenwelle 3 in Eingriff steht. Weiterhin ist eines der Zentriermittel 13 dargestellt, welche mit der korrespondierenden Zentriernut 12 auf dem Führungsabschnitt 11 in Eingriff steht. Zwischen der Innenverzahnung 20 und der Schaltverzahnung 17a befindet sich ein umlaufender Ringspalt 21. Die Schaltverzahnung 17a, 17b weist an ihren der korrespondierenden Verzahnung 18a, 18b zugewandten, sich in radialer Richtung erstreckenden Stirnflächen 22 eine Profilierung auf. Die Profilierung der Stirnflächen 22 ist abschnittsweise verjüngend ausgeführt. Die korrespondierende Verzahnung 18a bzw. 18b des frei drehenden Zahnrades 4 bzw. 5 weist ebenfalls sich in radialer Richtung erstreckende Stirnflächen 23 auf, die gleichfalls sich abschnittsweise verjüngend ausgeführt sind, wie in Fig. 5 dargestellt ist.

Beim Schalten der Schaltgetriebeanordnung 1 wird das Schieberad 7 in axialer Richtung in Richtung des zu schaltenden Zahnrades 4, 5 auf dem Führungsabschnitt 11 verschoben. Erreicht die Schaltverzahnung 17a bzw. 17b die korrespondierende Verzahnung 18a bzw. 18b, kann bei gleichzeitig feststehender Antriebswelle 2 und Zwischenwelle 3 die Situation auftreten, das die Zähne der Schaltverzahnung 17a bzw. 17b und der korrespondierenden Verzahnung 18a bzw. 18b Zahn vor Zahn stehen. In diesem Fall bewirkt die sich verjüngende Ausgestaltung der Stirnflächen 22 bzw. 23 ein Abgleiten der Verzahnungen voneinander in Umfangsrichtung, welches durch das Verdrehspiel zwischen der Führungsverzahnung 19 und der Innenverzahnung 20 ermöglicht wird. Diese Relativbewegung zwischen dem Schieberad 7 und dem zu schaltenden Zahnrad 4, 5 bewirkt das Eingreifen der jeweiligen Schaltverzahnung 17a, 17b mit der korrespondierenden Verzahnung 18a, 18b, ohne dass es einer zusätzlichen Funktionseinheit zur Erzeugung einer Relativbewegung bedarf. Die Relativbewegung der jeweiligen Schaltverzahnung 17a, 17b gegenüber der korrespondierenden Verzahnung 18a, 18b, zueinander wird durch die Trennung der Funktionen Führen und Eingreifen ermöglicht. Die Zentrierung des Schieberades 7 zum Ausgleich des Verdrehspiels erfolgt durch die Mittel zur Zentrierung 13. Während der Schaltphasen, in denen sich die Schaltgetriebeanordnung 1 in der Neutralstellung befindet, erfolgt die Zentrierung des Schieberades 7.

### Bezugszeichenliste

- 1: Schaltgetriebeanordnung
- 2: Antriebswelle
- 3: Zwischenwelle
- 4: Frei drehendes Zahnrad
- 5: Frei drehendes Zahnrad
- 6: Lager
- 7: Schieberad
- 8: Drittes Zahnrad
- 9: Viertes Zahnrad
- 10: Fünftes Zahnrad
- 11: Führungsabschnitt
- 12: Zentriernut
- 13: Mittel zur Zentrierung
- 14: Bohrung
- 15: Federelement
- 16: Zentrierelement
- 17a: Schaltverzahnung
- 17b: Schaltverzahnung
- 18a: Korrespondierende Verzahnung
- 18b: Korrespondierende Verzahnung
- 19: Führungsverzahnung
- 20: Innenverzahnung
- 21: Ringspalt
- 22: Stirnfläche von 17a
- 23: Stirnfläche von 18a

## Patentansprüche

1. Schaltgetriebeanordnung (1) ein Schieberad (7) umfassend, welches mit einer Innenverzahnung (20) ausgeführt ist, mittels der das Schieberad (7) auf einer mit einem eine Führungsverzahnung (19) aufweisenden Führungsabschnitt (11) versehenen Welle (3) axial verschieblich angeordnet ist, sowie mit zumindest einer an dem Schieberad (7) angeordneten Schaltverzahnung (17a, 17b), welche mit einer korrespondierenden Verzahnung (18a, 18b) an zumindest einem auf der Welle (3) angeordneten, lose drehenden Schaltzahnrad (4, 5) in Eingriff bringbar ist, wobei das Schieberad (7) zum in Eingriff bringen der zumindest einen Schaltverzahnung (17a, 17b) mit der korrespondierenden Verzahnung (18a, 18b) des zumindest einen Schaltzahnrades (4, 5) einen integrierten Verdrehausgleich aufweist, wobei zwischen der Innenverzahnung (20) des Schieberades (7) und der Führungsverzahnung (19) auf der Welle (3) ein Verdrehspiel vorgesehen ist, welches eine Auslenkbewegung des Schieberades (7) in Umfangsrichtung ermöglicht, wobei die korrespondierende Verzahnung (18a, 18b) des zumindest einen Schaltzahnrades (4, 5) gegenüber der Führungsverzahnung (19) des Führungsabschnitts (11) der Welle (3) zurückgesetzt ist, **dadurch gekennzeichnet, dass** Mittel zur Zentrierung (13) der Innenverzahnung (20) des Schieberades (7) relativ zu der Führungsverzahnung (19) vorgesehen sind.

2. Schaltgetriebeanordnung (1) ein Schieberad (7) umfassend nach Anspruch 1, **dadurch gekennzeichnet, dass** die zumindest eine Schaltverzahnung (17a, 17b) seitlich an dem Schieberad (7) angeordnet ist.

3. Schaltgetriebeanordnung (1) ein Schieberad (7) umfassend nach einem der vorangehenden Ansprüche, **dadurch gekennzeichnet, dass** einander zugewandte Stirnflächen (22, 23) der Schaltverzahnung (17a, 17b) und/oder der korrespondierenden Verzahnung (18a, 18b) des zumindest einen Schaltzahnrades (4, 5) ein sich in axialer Richtung abschnittsweise verjüngendes Profil aufweisen.

4. Schaltgetriebeanordnung (1) ein Schieberad (7) umfassend nach einem der vorangehenden Ansprüche , **dadurch gekennzeichnet, dass** das Mittel zur Zentrierung (13) als mindestens ein federbelastetes Zentrierelement (16) ausgeführt sind, welches sich in einer Bohrung (14) und einer Zentriernut (12) abstützt.

5. Schaltgetriebeanordnung (1) ein Schieberad (7) umfassend nach Anspruch 4, **dadurch gekennzeichnet, dass** die mindestens eine Bohrung (14) in das Schieberad (7) und die mindestens eine Zentriernut (12) in den Führungsabschnitt (11) eingelassen ist.

6. Schaltgetriebeanordnung (1) ein Schieberad (7) umfassend nach Anspruch 4, **dadurch gekennzeichnet, dass** die mindestens eine Bohrung (14) in den Führungsabschnitt (11) und die Zentriernut (12) in das Schieberad (7) eingelassen ist.

7. Schaltgetriebeanordnung (1) ein Schieberad (7) umfassend nach einem der Ansprüche 4 bis 6, **dadurch gekennzeichnet, dass** die mindestens eine Zentriernut (12) keilförmig ausgebildet ist.

## Claims

1. A gearbox assembly (1) comprising a sliding gear wheel (7) which is equipped with an internal set of teeth (20), by means of which the sliding gear wheel (7) is axially displaceably disposed on a shaft (3) provided with a guide section (11) having a guide set of teeth (19), as well as with at least one set of gear teeth (17a, 17b) which can be brought into engagement with a corresponding set of teeth (18a, 18b) on at least one freely rotating toothed gear wheel (4, 5) disposed on the shaft (3), wherein in order to bring the at least one set of gear teeth (17a, 17b) into engagement with the corresponding set of teeth (18a, 18b) of the at least one toothed gear wheel (4, 5), the sliding gear wheel (7) has an integrated twist compensation, wherein a backlash is provided on the shaft (3) between the internal set of teeth (20) of the sliding gear wheel (7) and the guide set of teeth (19) which allows for a deflectional movement of the sliding gear wheel (7) in the circumferential direction, wherein the corresponding set of teeth (18a, 18b) of the at least one toothed gear wheel (4, 5) is moved back with respect to the guide set of teeth (19) of the guide section (11) of the shaft (3), **characterized in that** means (13) are provided for centring the internal set of teeth (20) of the sliding gear wheel (7) relative to the guide set of teeth (19).

2. The gearbox assembly (1) comprising a sliding gear wheel (7) according to claim 1, **characterized in that** the at least one set of gear teeth (17a, 17b) is laterally disposed on the sliding gear wheel (7).

3. The gearbox assembly (1) comprising a sliding gear wheel (7) according to one of the preceding claims, **characterized in that** end faces (22, 23) of the set of gear teeth (17a, 17b) and/or of the corresponding set of teeth (18a, 18b) of the at least one toothed gear wheel (4, 5) which face each other have a profile which tapers in sections in the axial direction.

4. The gearbox assembly (1) comprising a sliding gear wheel (7) according to one of the preceding claims, **characterized in that** the centring means (13) are configured as at least one springloaded centring element (16) which is supported in a hole (14) and a centring groove (12).

5. The gearbox assembly (1) comprising a sliding gear wheel (7) according to claim 4, **characterized in that** the at least one hole (14) is recessed into the sliding gear wheel (7) and the at least one centring groove (12) is recessed into the guide section (11).

6. The gearbox assembly (1) comprising a sliding gear wheel (7) according to claim 4, **characterized in that** the at least one hole (14) is recessed into the guide section (11) and the centring groove (12) is recessed into the sliding gear wheel (7).

7. The gearbox assembly (1) comprising a sliding gear wheel (7) according to one of claims 4 to 6, **characterized in that** the at least one centring groove (12) is V-shaped in configuration.

## Revendications

1. Agencement de transmission (1) incluant un pignon baladeur (7) qui est conçu avec une denture intérieure (20) au moyen de laquelle le pignon baladeur (7) est monté à coulissement axial sur un arbre (3) muni d'une portion de guidage (11) comportant une denture de guidage (19), ainsi que comprenant au moins une denture de changement de rapport (17a, 17b) qui est disposée sur le pignon baladeur (7) et qui peut être amenée en prise avec une denture correspondante (18a, 18b) sur au moins une roue dentée de changement de rapport à libre rotation (4, 5) disposée sur l'arbre (3), le pignon baladeur (7) comportant une compensation de torsion intégrée pour la mise en prise de la au moins une denture de changement de rapport (17a, 17b) avec la denture correspondante (18a, 18b), entre la denture intérieure (20) du pignon baladeur (7) et la denture de guidage (19) étant prévu sur l'arbre (3) un jeu circonférentiel qui permet un débattement du pignon baladeur (7) dans la direction circonférentielle, la denture correspondante (18a, 18b) de la au moins une roue dentée de changement de rapport (4, 5) étant en retrait par rapport à la denture de guidage (19) de la portion de guidage (11) de l'arbre (3), **caractérisé en ce que** des moyens sont prévus pour le centrage (13) de la denture intérieure (20) du pignon baladeur (7) par rapport à la denture de guidage (19).

2. Agencement de transmission (1) incluant un pignon baladeur (7) selon la revendication 1, **caractérisé en ce que** la au moins une denture de changement de rapport (17a, 17b) est disposée latéralement sur le pignon baladeur (7).

3. Agencement de transmission (1) incluant un pignon baladeur (7) selon une des revendications précédentes, **caractérisé en ce que** des faces frontales en vis-à-vis (22, 23) de la denture de changement de rapport (17a, 17b) et/ou de la denture correspondante (18a, 18b) de la au moins une roue dentée de changement de rapport (4, 5) présentent un profil qui se rétrécit par portions dans la direction axiale.

4. Agencement de transmission (1) incluant un pignon baladeur (7) selon une des revendications précédentes, **caractérisé en ce que** le moyen de centrage (13) est conformé en au moins un élément de centrage sous sollicitation élastique (16) qui prend appui dans un perçage (14) et une rainure de centrage (12).

5. Agencement de transmission (1) incluant un pignon baladeur (7) selon la revendication 4, **caractérisé en ce que** le au moins un perçage (14) est ménagé dans le pignon baladeur (7), et la au moins une rainure de centrage (12) dans la portion de guidage (11).

6. Agencement de transmission (1) incluant un pignon baladeur (7) selon la revendication 4, **caractérisé en ce que** le au moins un perçage (14) est ménagé dans la portion de guidage (11), et la au moins une rainure de centrage (12) dans le pignon baladeur (7).

7. Agencement de transmission (1) incluant un pignon baladeur (7) selon une des revendications 4 à 6, **caractérisé en ce que** la au moins une rainure de centrage (12) est conçue en forme de coin.
